Europäisches Patentamt

(19) European Patent Office

Office européen des brevets

(11) Publication number: **0 161 326**
A1

# EUROPEAN PATENT APPLICATION

(21) Application number: 84105571.8

(22) Date of filing: 16.05.84

(51) Int. Cl.⁴: **F 16 F  15/30,** F 16 F  15/32

(43) Date of publication of application: 21.11.85
Bulletin 85/47

(84) Designated Contracting States: CH DE LI SE

(71) Applicant: **MITSUBISHI DENKI KABUSHIKI KAISHA, 2-3,
Marunouchi 2-chome Chiyoda-ku, Tokyo 100 (JP)**

(72) Inventor: **Yamauchi, Kimiaki, 5-27, Midoriga-oka
Naka 1-chome, Miki Hyogo (JP)**
Inventor: **Konishi, Tadashi, 2-1-21, Nishi, Akashi-cho,
Akashi Hyogo (JP)**

(74) Representative: **EGLI-EUROPEAN PATENT
ATTORNEYS, Horneggstrasse 4, CH-8008 Zürich (CH)**

(54)  **Flywheel device.**

(57)   There is disclosed a flywheel device including disc-like flywheel means (2) to the outer periphery of which are formed a number of screw-hole-like balance weight pockets (8) and a plurality of screw-rod-like balance weight elements introduced into selected ones of said balance weight pockets so as not to be protruded beyond the outer surface of the flywheel means.

# FLYWHEEL DEVICE

## BACKGROUND OF THE INVENTION

This invention relates to a flywheel device which is directly coupled to an electric generator provided with electrically activated starting means. More particularly, it relates to such flywheel device according to which an electrical energy is converted into and stored as an inertial energy of a rotating body, which inertial energy can be reconverted into and supplied as an electrical energy whenever the occasion demands.

Certain prior art flywheel devices of the above described type are directly coupled to an electric generator operatively linked to a separate starting electric motor. Other flywheel devices of the same type are directly coupled to a motor-generator, i.e. a dynamoelectric device that may be selectively used as the starting electric motor or as the electric generator through use of stationary thyristor starting means. In both of these cases, the diameter of the flywheel device is necessarily increased in order to achieve a large inertial effect so that the total weight of the device occasionally reaches hundreds of tons. In addition, since the rated r.p.m. of the device comprized of a unitary disc of an extremely large weight is inconvenient in view of transport or manufacture, the device is usually made up of a plurality of flywheel discs of lesser thicknesses that are stacked up one upon the other.

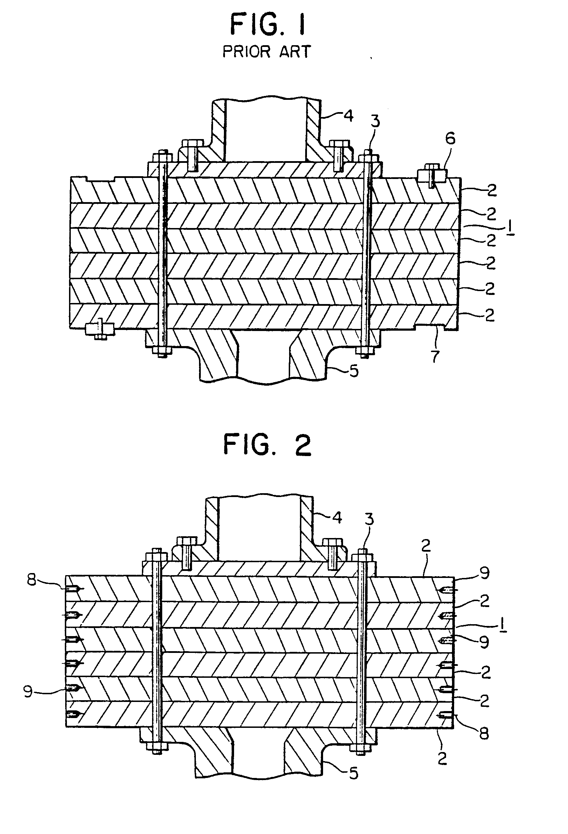

Fig. 1 shows this type of the flywheel device. In the drawing, a flywheel device 1 consists essentially of a plurality of solid discs 2 clamped together by a plurality of tightening bolts 3. The device 1 is directly coupled to a shaft 4 and to a thrust collar 5.

When driven at an elevated r.p.m., the flywheel device of the larger diameter and weight mass is subjected to severe vibrations because of weight inequalities brought about by the error caused in machining and assemblying of solid discs 2 or in direct coupling of the flywheel device to the shaft. One or more balance weights 6 are employed in order to compensate for these weight inequalities. One or more groove-like balance weight pockets are provided on both end faces of the device into which the balance weight 6 is fitted in such a manner that the balance weight is unable to fly out under a centrifugal force during rotation of the shaft 4.

In correcting for irregular vibrations caused by such weight inequalities, vibrations of the bearing and the shaft are monitored during acceleration of the device 1. Acceleration is discontinued at the time the magnitude of the vibrations reaches a certain threshold value, and the phase as well as magnitude of the vibrations of the shaft

- 2 -

and the bearing are measured. Based on the thus obtained data, one or more balance weights 8 are added for adjustment. The device is again accelerated as above. The sequence of the above described operations is repeated until the magnitude of the vibrations falls below a certain allowable limit for a given balance weight or a given set of balance weights up to the rated r.p.m. of the shaft. The balance weight or weights are then attached at the optimum position on the upper and/or lower end face of the flywheel device device 1.

In the conventional flywheel device, described above, it is necessary to correct for the totality of the weight inequalities caused by the disparities and assemblying error of the individual solid discs and also by the assemblying error caused in connecting the flywheel device to the shaft 4 or to the thrust collar 5. As a result thereof, the size of the unitary balance weight 6 is necessarily increased. In addition, it is not possible to completely eliminate weight inequalities for the total available speed range of the shaft because of the difference of the actual position of the weight inequalities from that of the balance weight 8. Moreover, in the conventional device, the balance weight 6 is protruded at the peripheral part of the flywheel device 2 rotating at an elevated speed, thus causing noise and increased windage loss.

## SUMMARY OF THE INVENTION

This invention has been made in order to eliminate the above described defects of the prior art device. It is a principal object of the present invention to provide a flywheel device wherein screw holes are machined in the peripheral zone of each of the solid discs for attachment of the balance weights thereto for thereby enabling an easy and accurate correction of the irregular vibrations caused by weight inequalities and reduction of the noise as well as windage loss.

## BRIEF DESCRIPTION OF THE DRAWINGS

Fig. 1 is a longitudinal sectional view of the conventional flywheel device.

Fig. 2 is a longitudinal sectional view of a flywheel device according to a preferred embodiment of the invention.

In the drawings, the same numerals are used to depict same or equivalent parts.

## DESCRIPTION OF THE PREFERRED EMBODIMENT

The flywheel device according to a preferred embodiment of the present invention is hereafter explained by referring to the drawings. In Fig. 2, a flywheel device 1 is made up of a plurality of solid discs 2 stacked one upon the other, as in the prior art device mentioned above. In the flywheel device shown in Fig. 2, screw-like balance wheel pockets 8 are formed at regular angular intervals on the peripheral surface of each of the solid discs 2 of the flywheel device. Into these pockets 8, there are threadedly engaged balance weight elements 9 in the form of screw rods as shown.

In compensating for weight inequalities, the sequence of operations consisting in accelerating the flywheel device 1, measuring the phase and vibrations of the shaft and the bearing and securing the balance weight elements 9 is repeated in the manner described above, until the optimum ones of the balance weight elements are secured at the optimum axial and circumferential positions.

In the above embodiment, the flywheel device 1 consists of several solid discs stacked one upon the other. However, the similar effect may be achieved with the flywheel device consisting of only one disc of a larger thickness. In addition, depending on the thickness of the solid discs 2, the number of the balance weight pockets 8 may be reduced by machining these pockets only to discs selected at the rate of one of several contiguous discs, thereby saving the labor in the machining operation.

It is thus seen that the present invention provides an arrangement in which the balance weight elements are attached in several positions on the peripheral surface instead of at the end faces of the flywheel device and in which these elements are not protruded beyond the flywheel surface thus allowing for easy and accurate correction of the weight inequalities and the consequent irregular vibrations of the shaft while simultaneously reducing the noise and the windage loss.

What is claimed is:

1.  A flywheel device comprizing disc-like flywheel means the outer periphery of which is formed with a number of screw-hole-like balance weight pockets, and a plurality of screw-rod-like balance weight elements introduced into selected ones of said balance weight pockets so as not to be protruded beyond the outer surface of the flywheel means.

2.  The flywheel device as claimed in claim 1 characterized in that said flywheel means comprizes a plurality of discs stacked axially one upon the other.

3.  The flywheel device as claimed in claim 2 characterized in that the balance weight pockets are formed on the outer periphery of each of said discs.

4.  The flywheel device as claimed in claim 2 characterized in that the balance weight pockets are formed on the outer periphery of said discs selected at the rate of one of several contiguous discs.

0161326

## FIG. 1
PRIOR ART

## FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-2 964 972 (LINDSEY)<br>* the whole document * | 1 | F 16 F 15/30<br>F 16 F 15/32 |
| | --- | | |
| A | US-A-2 385 252 (BENNETT)<br>* the whole document * | 1 | |
| | --- | | |
| A | US-A- 861 463 (HYDE)<br>* the whole document * | 1 | |
| | --- | | |
| A | GB-A-2 075 634 (DAIMLER-BENZ) | | |
| | --- | | |
| A | FR-A- 708 102 (ALSTHOM)<br><br>* the whole document *<br><br>----- | | **TECHNICAL FIELDS SEARCHED (Int. Cl. ³)**<br><br>F 16 F<br>F 16 C<br>B 60 K<br>E 03 G |

The present search report has been drawn up for all claims

| Place of search | Date of completion of the search | Examiner |
|---|---|---|
| THE HAGUE | 17-09-1984 | PIRIOU J.C. |